# EUROPEAN PATENT APPLICATION

(11) **EP 4 462 632 A1**
(43) Date of publication of application: **13.11.2024**
(21) Application number: 23315185.1
(22) Date of filing: 11.05.2023
(51) Int. Cl.: H02J 7/00, H01M 10/0525, H01M 10/42

(54) **PROTECTED ELECTRIC CELL, ELECTRIC CELL ASSEMBLY AND ELECTRIC DEVICE COMPRISING SUCH**

(71) Applicant: Exail Aerospace, 31300 Toulouse (FR)
(72) Inventor: Dussaud, Sébastien, 31300 TOULOUSE (FR); Cauhepe, Alain, 31300 TOULOUSE (FR); Toussaint, Yannick, 31300 TOULOUSE (FR)
(74) Representative: Santarelli

(57) **Abstract**

Protected electric cell (100) comprising an electric cell (110), a positive (111) and a negative (112) electric line respectively connected to terminals of the electric cell (110), a diode (120) arranged in a parallel to the electric cell (110) with its anode connected to the negative electric line (112) and its cathode connected to the positive electric line (111), and an electric fuse (130) arranged in series to the electric cell (110),
the electric cell (110) being configured to deliver a nominal current when discharging,
the electric fuse (130) having a breaking capacity corresponding substantially to the nominal current,
so that, when totally or at least partially discharged, the electric cell (110) is protected from a polarity reversal caused by a forced current driven through it by another electric source connected in series to the protected electric cell (100).

## Description

### Technical Field

The present disclosure relates to a protected electric cell, and an electric cell assembly comprising several such protected electric cells.

### Background art

Electric cells, hereafter also called cells, are electrochemical devices that produce electricity by converting chemical energy into electrical energy through an oxidation-reduction reaction.

Electric cells may be arranged so as to form an electric cell assembly, or electric battery, in order to deliver electric energy to an electric device connected to the electric battery.

In such an arrangement, electric cells may be connected in series, i.e. forming a branch of cells, and/or in parallel.

Electric cells, or electric batteries, are often protected against a reverse voltage applied on their terminals when charging.

For example, a well-known technique for avoiding damage due to reverse voltage is the use of a diode connected in series to a cell or to a branch of cells.

Another well-known technique is the use of a mechanical keying, i.e. a mechanical error-proofing, avoiding improper installation and use of a cell or electric battery.

These known solutions allow avoiding damage due to reverse voltage applied at electric cell's terminals. However, they are limited to applications where the reverse voltage is due to an error of handling or use.

Thus, in a case of proper use of the electric cell or electric battery, these arrangements are not meant to intervene in the electric cell's or electric battery's operation, and play no further role.

However, reverse voltage operation of an electric cell, leading to a polarity reversal of an electric cell, may occur when the electric cell is totally or partially discharged, which may lead to a thermal runaway. This event may occur even in case of correct handling or use of the electric cell assembly.

Thus, there is a need for providing a technical solution for avoiding polarity reversal in an electric cell assembly during its operation, so as to avoid damage to one or more of the electric cells due to a forced current driven through it.

### Summary of the disclosure

It is an aim of the present disclosure to provide a protected electric cell, an electric cell assembly and an electric device which allow protecting the totally or partially discharged protected electric cell from damage due to polarity reversal.

According to a first aspect of the present disclosure, there is provided a protected electric cell comprising an electric cell having two terminals, a positive electric line and a negative electric line respectively connected to the terminals of the electric cell, a diode arranged in parallel to the electric cell with its anode connected to the negative electric line and its cathode connected to the positive electric line, and an electric fuse arranged in series to the electric cell,
the electric cell being configured to deliver a nominal current when discharging, the electric fuse having a breaking capacity corresponding substantially to the nominal current,
so that, when totally or at least partially discharged, the electric cell is protected from a polarity reversal caused by a forced current driven through it by another electric source connected in series to the protected electric cell.

According to the disclosure, the protected electric cell makes it possible to avoid thermal runaway and short-circuit of the electric cell, and thus irretrievable internal damages of the electric cell.

Thanks to the by-bass diode and the electric fuse arranged respectively in parallel and in series, it is possible to avoid damages caused by a polarity reversal of the electric cell. The by-pass diode allows protecting the electric cell from excessive electrical stress, by rerouting a forced current being driven through itself, instead of through the electric cell.

Thus, a totally or partially protected electric cell according to the disclosure can be protected from a polarity reversal caused by another protected electric cell connected in series, which drives a forced current through it.

Thus, electric devices powered by at least one protected electric cell according to the disclosure can be effectively protected from damages, especially from damages by fire and possibly explosion, due to overheating of the electric cell, caused by thermal runaway, itself caused by polarity reversal. Electric devices powered by at least one protected electric cell according to the disclosure thus can reliably be powered.

It should also be noted that, while significantly increasing the safety of the electric cell operation, the protected electric cell can provide high performances at nominal current in operating condition, as well in continuous mode as in burst mode with short repetition times between bursts.

Also, risks of short-circuits are significantly reduced by the presence of the electric fuse connected in series the electric cell.

Advantageous and convenient features of the protected electric cell are described below.

The electric source is another similar or identical protected electric cell.

The maximum current limit in forward operation of the diode is substantially twice the nominal current.

The protected electric cell further comprises a printed circuit board which supports the diode and the electric fuse.

The electric cell has a substantially cylindrical shape and presents two opposite terminals on its bases, and the printed circuit board has a substantially annular shape with an outer diameter corresponding substantially to an outer diameter of the substantially cylindrical shape of the electric cell, and is arranged at the level of one of the bases of the electric cell.

The printed circuit board is arranged at the level of the electric cell's base which presents the positive terminal of the electric cell.

The electric cell's base which presents the positive terminal of the electric cell comprises a protruding nipple, and the printed circuit board has an inner diameter corresponding substantially to the diameter of the protruding nipple.

The printed circuit board comprises a metallic path at the level of the diode, and the thickness of the metallic path at the level of the diode's anode is at least 200 micrometers.

The protected electric cell further comprises at least one protective sheath arranged at least around the electric cell and the printed circuit board, the at least one protective sheath being preferably made of heat-shrinkable plastic.

The protected electric cell comprises two protective sheaths, arranged on top of each other.

The electric cell is a lithium-based electric cell.

The electric cell is a Lithium Manganese Oxide (LiMnO2) electric cell.

The disclosure also provides, according to a second aspect, an electric cell assembly comprising at least one branch of protected electric cells, each branch comprising at least two protected electric cells as described here above.

Such an electric cell assembly, also called electric battery or energy pack, makes it possible to provide greater voltage and/or current to an electric device connected to the electric cell assembly.

Advantageous and convenient features of the electric cell assembly are described below.

The electric cell assembly comprises at least two branches of protected electric cells, the branches being connected in parallel.

The electric cell assembly comprises two to four branches of protected electric cells, each branch comprising two protected electric cells connected in series.

Each branch is connected between a positive supply line and a negative supply line of the electric cell assembly, and wherein each branch comprises a protection diode with its anode connected to the positive supply line and its cathode connected in series with the positive electric line of the first protected electric cells in line in said branch.

The disclosure also provides, according to a third aspect, an electric device, comprising at least one electric cell assembly as described here above, for powering the electric device.

### Brief Description of the Drawings

The description of the disclosure now continues with a detailed description of advantageous embodiments given hereinafter by way of non-limiting example and with reference to the appended drawings.
Figure 1 is a schematic electric circuit diagram of an electric cell assembly comprising two protected electric cells connected in series;
Figure 2 is a schematic electric circuit diagram of a protected electric cell;
Figure 3 is a schematic electric circuit diagram of an electric cell assembly comprising a plurality of protected electric cells;
Figure 4 is an exploded view of a protected electric cell according to an embodiment;
Figure 5 is an experimental test result of the operation of an unprotected electric cell, comprising plots of the current, respectively voltage, respectively temperature, in the cell over time; and
Figure 6 is an experimental test result of the operation of a protected electric cell, comprising plots of the current, respectively voltage, respectively temperature, in the cell over time.

### Detailed Description of example embodiments

In the following description, similar features in different embodiments are referred to with the same reference numbers.

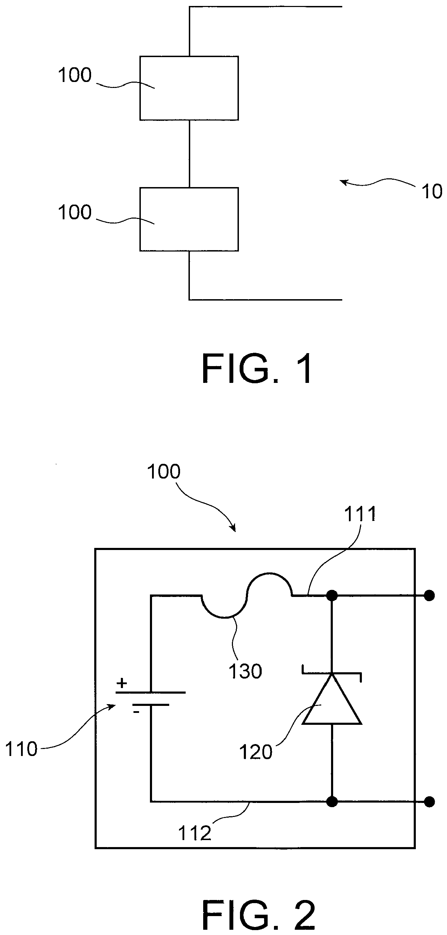

Figure 1 is a schematic, simplified circuit diagram of an electric cell assembly 10, comprising two protected electric cells 100 connected in series. Such an electric cell assembly 10 is a possible configuration of an electric battery comprising several protected electric cells 100, as it will be described later on.

In operating condition, before use for powering an electric device, both protected electric cells 100 are fully or at least partially charged, and store a certain amount of energy.

When a load is applied on the terminals of the electric cell assembly 10, the protected electric cells 100 discharge during time.

Since both protected electric cells 100 are not necessarily charged at the same level (due to different manufacturing dates and/or aging conditions, for example), full discharge not necessarily occurs at the same time, so that one of the protected electric cells 100 may be discharged whilst the other protected electric cell 100 still contains some energy.

Using known, unprotected electric cells, this may lead the electric cell which is first to be discharged into a so-called "polarity reversal" state by the other electric cell, which drives a current through the discharged electric cell. In such conditions, damages of the discharged electric cell, and thus of the electric cell assembly, is very likely.

The electric cell assembly 10 comprising protected electric cells 100 makes it possible to avoid this drawback, by protecting an electric cell 100 when fully or almost fully discharged.

To this end, turning to Figure 2 which is an electric circuit diagram of a protected electric cell 100, a protected electric cell 100 according to an embodiment is described.

As illustrated, the protected electric cell 100 comprises an electric cell 110, which is an electrochemical device that produces electricity by converting chemical energy into electrical energy through an oxidation-reduction reaction.

For the sake of illustration, the electric cell 110 may be a non-rechargeable electric cell, also called "primary battery". For example, the electric cell 110 may be a LiMnO2 (Lithium Manganese Oxide) cell.

The characteristics of the electric cell 110 may be chosen so as to be suitable for its intended purpose, and have no incidence on the working principle of the protected electric cell 100.

For example, the electric cell 110 may be configured to have an open circuit voltage of a few Volts (V), for instance 3.1V, and to deliver a nominal current of a few Amperes (A), for instance 1.5A.

The electric cell 110 has a positive terminal and a negative terminal, denoted respectively "+" and "-" on Figure 2. It should be noted that this convention denotes the polarity of the electric cell 110 in operating conditions, when discharging.

In addition, the protected electric cell 100 comprises a positive electric line 111 and a negative electric line 112, respectively connected to the positive terminal of the electric cell 110 and the negative terminal of the electric cell 110.

The protected electric cell 100 further comprises an electric diode 120, hereafter called diode 120, arranged in parallel to the electric cell 110. The anode of the diode 120 is connected to the negative electric line 112 and the cathode of the diode 120 is connected to the positive electric line 111. In order words, the forward direction of the diode 120 is from the negative electric line 112 towards the positive electric line 111. The diode 120 thus is a by-pass diode 120, arranged in a "by-pass" arrangement with respect to the electric cell 110.

The diode 120 may be selected so as to have a very low reverse current, even at high temperatures. The diode 120 may also be selected so that its maximum current limit in forward operation is substantially twice the nominal current of the electric cell 110, for example approximately 3A when the nominal current of the electric cell 110 is approximately 1.5A. The diode 120 may be a Zener diode.

The protected electric cell also comprises an electric fuse 130, hereafter also called fuse 130, arranged in series to the electric cell 110. For example, the fuse 130 is arranged on the positive electric line 111, between the positive terminal of the electric cell 110 and the cathode of the diode 120. However, in an alternative embodiment, the fuse 130 may also be arranged on the negative electric line 112, between the negative terminal of the electric cell 110 and the anode of the diode 120

The breaking capacity of the electric fuse 130 may be substantially equal to the nominal current of the electric cell 110, preferably over the entire operating temperature range of the protected electric cell 100.

For example, suitable commercially available references for the diode 120 and the fuse 130 at the filing date of the present application are:
- for the fuse 130: reference 046801.5NRHF, provided by Littlefuse (registered trademark)
- for the diode 120: reference RB058LAM-60TR, provided by ROHM Semiconductor (registered trademark),
which may be used one with the other or not.

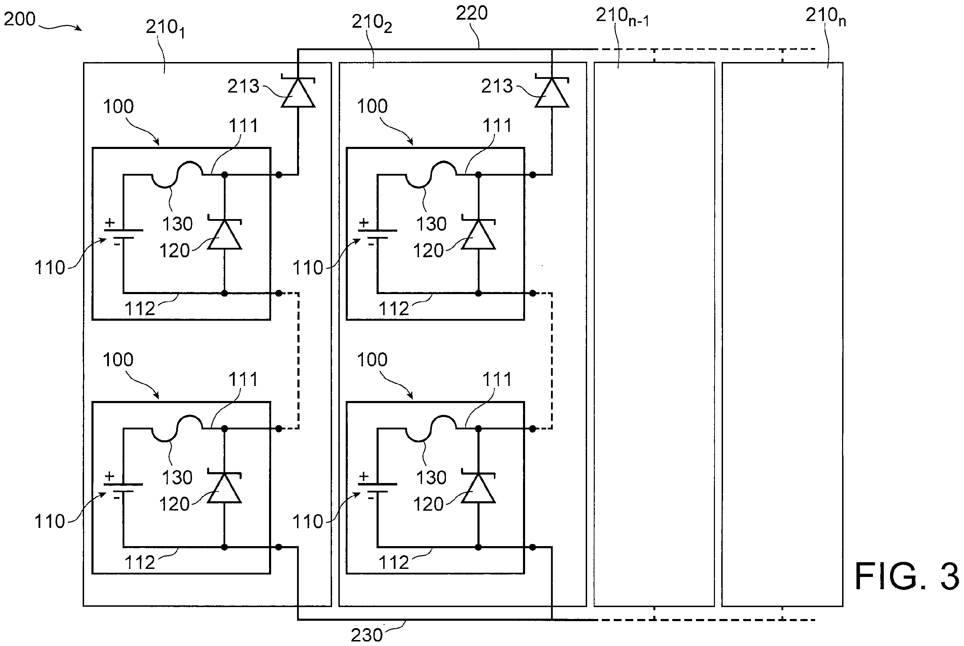

Turning to Figure 3, an electric circuit diagram of an electric cell assembly 200 comprising a plurality of protected electric cells 100, according to an embodiment, is shown. Hereafter, the electric cell assembly is also called electric battery, or "energy pack".

According to the illustrated embodiment, the electric battery 200 comprises several branches 210 of protected electric cells 100, numbered from 1 through n (only branches 210₁, 210₂, 210ₙ₋₁ and 210ₙ are shown on Figure 3).

However, the battery 200 may comprise only one branch 210.

For example, a battery 200 comprising only one branch 210 may comprise three protected electric cells 100 arranged in series.

When the battery 200 comprises more than one branch 210, the branches 210 are connected in parallel between a positive supply line 220 and a negative supply line 230. An electric device to be powered may be connected to the positive supply line 220 and the negative supply line 230.

A branch 210 comprises two or more protected electric cells 100 arranged in series.

In the illustrated embodiment, a branch 210 comprises two protected electric cells 100 arranged in series.

More generally, the battery 200 may comprise any combination of one or more branches 210, which comprise two or more protected electric cells 100.

For example, the battery 200 may comprise two to four branches 210 connected in parallel, each branch 210 comprising two protected electric cells 100 connected in series.

It should be noted that a branch 210 may comprise an optional protection diode 213, for protecting a branch from a reverse voltage applied on the branch 210. To this end, the cathode of the protection diode 213 may be connected to the positive supply line 220 and the anode of the protection diode 213 may be connected to the positive electric line 111 of the first protected electric cell 100 in line.

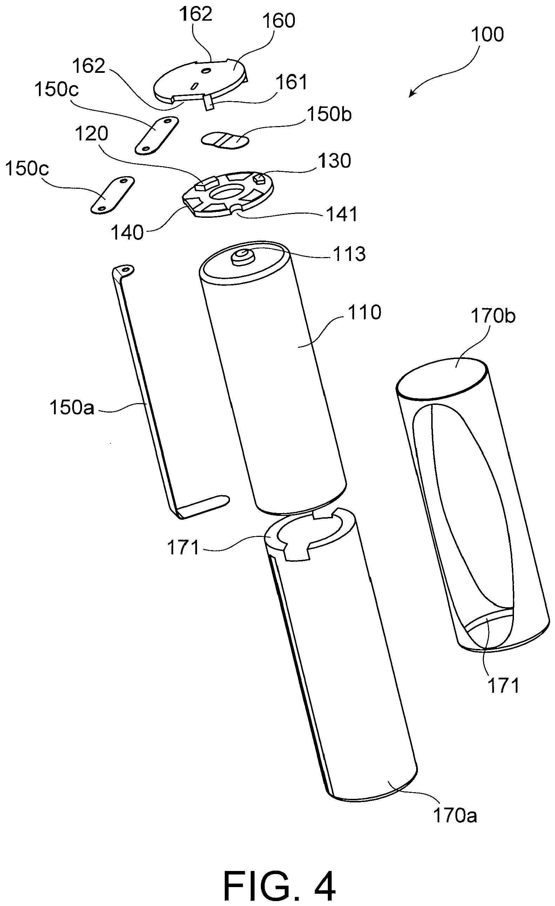

Referring now to Figure 4, a constructive example of a protected electric cell 100 is described, according to an embodiment.

The protected electric cell 100 comprises an electric cell 110 provided in a cylindrical casing in the illustrated embodiment, without being limited to such shape. For example, the electric cell 110 may be a standardized size-A electric cell.

The electric cell 110 presents two opposite terminals on the cylindrical casing's bases. On figure 4, only the positive terminal of the electric cell 110 is shown, and comprises a protruding nipple 113.

The protected electric cell 100 further comprises a printed circuit board (PCB) 140 which supports the diode 120 and the fuse 130.

The PCB 140 is preferably arranged at the level of one of the bases of the cylindrical casing of the electric cell 110. In the illustrated embodiment, the PCB 140 is arranged at the level of the electric cell's 110 positive terminal.

According to the illustrated embodiment, the PCB 140 has a substantially circular shape, with an outer diameter corresponding substantially to an outer diameter of the cylindrical casing of the electric cell 110.

In this particular case, when arranged at the level of the electric cell's 110 positive terminal having a protruding nipple 113, the PCB 140 has an annular shape, with an inner diameter corresponding substantially to a diameter of the protruding nipple 113.

The PCB 140 is provided with several metallic paths forming, among others, parts of the positive electric line 111 and the negative electric line 112. The thickness of the metallic paths should be dimensioned such as to obtain a sufficient thermal drain of dissipation of the diode 120. For example, the thickness may be of about 200 micrometers, especially at the level of the anode of the diode 120.

The protected electric cell 100 comprises one or more electrically conductive tabs 150a to 150c. In particular, one electrically conductive tab 150a is configured to electrically link the negative terminal of the electric cell 110 to the PCB 140. For this purpose, the electrically conductive tab 150a has an elongated form, and one end provided with a latch for connecting with the negative terminal, and one other end provided with a latch for connecting with the PCB 140.

One conductive tab 150b may be arranged so as to connected the positive terminal of the electric cell 110 to the PCB 140.

Two other conductive tabs 150c may be arranged so as to form connection terminals terminating respectively the positive electric line 111 and negative electric line 112.

The protected electric cell 100 may also comprise a cover 160, so as to protect the conductive tabs 150 and the PCB 140. The cover 160 may be substantially in the form of a circular disc, and may comprise a pin 161 cooperating with a recess 141 of the PCB 140, for positioning the cover 160 on top of the PCB 140. The cover 160 also may comprise one or more recesses 162 for accommodating the connection terminals of the protected electric cell 100 formed by the conductive tabs 150c.

Further, the protected electric cell 100 may at least comprise a first cylindrical protective sheath 170a with inner protruding edges 171 at its bases, the cylindrical protective sheath 170a being arranged around the electric cell 110, the PCB 140, the conductive tabs 150 and the cover 160. Thanks to the edges 171, the assembly of above-mentioned components may be maintained, and protected.

The protected electric cell 100 may also comprise a second cylindrical protective sheath 170b, arranged around the first cylindrical protective sheath 170a, so as to improve maintenance and protection even further.

The protective sheaths 170a and/or 170b may be made of heat-shrinkable plastic, which ensures a tight fit to the above-mentioned components and thus their maintenance.

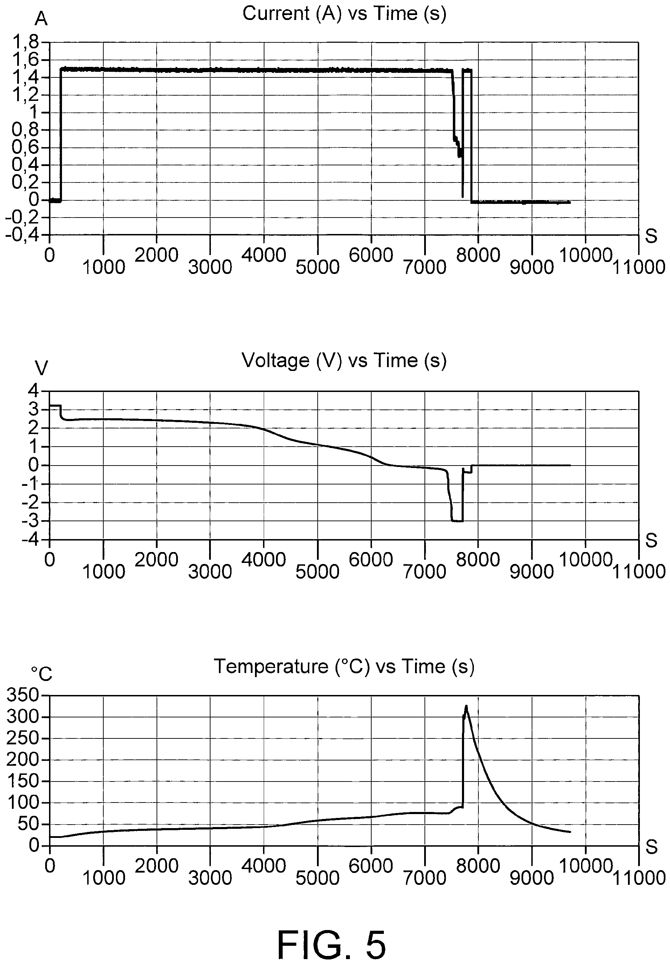

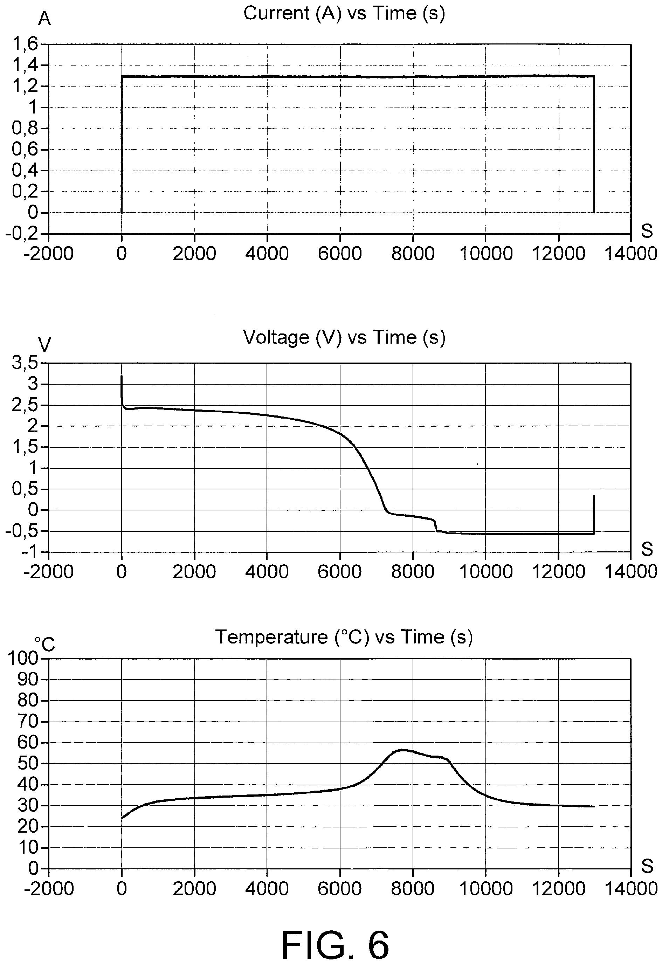

Referring to Figures 5 and 6, the functioning of a protected electric cell 100 is described.

Figures 5 and 6 represent test results of both an unprotected electric cell and a protected electric cell in operating conditions and polarity reversal conditions.

For the purpose of these tests, the setup consists of an unprotected, respectively protected, electric cell connected to a four-quadrant bipolar type power supply. This type of power supply is capable of absorbing a constant current, simulating an operation under dynamic load, and capable of delivering a floating voltage under constant current, simulating an operation as if connected to a power generator, i.e., in polarity reversal conditions.

In short, this setup allows reproducing operating conditions, when the cell is under load, and polarity reversal conditions, when the cell is substantially totally discharged, and connected in series to another electric source, for example another electric cell, driving a forced current through it.

In the tests that were carried out, the discharge current of the tested cell is substantially identical to the forced current applied during polarity reversal.

The plots displayed in Figures 5 and 6 respectively show current trough the electric cell over time, voltage at the cell's terminals over time, and temperature of the electric cell over time. Current is expressed in Amperes (A), Voltage is expressed in Volts (V), and Temperature is expressed in Degrees Celsius (°C). Time is expressed in seconds (s).

Firstly, turning to Figure 5, the operation of an unprotected electric cell is described.

At time t₀=0s, the cell is fully charged and delivers a discharge current of about 1.5A when connected to the load.

During operation of the cell, between to and approximately t₇₅₀₀=7500s, the voltage at the cell's terminals drops continuously, the cell being discharged.

At approximately t₇₅₀₀, the cell is fully discharged and delivers no more current. Shortly after this, the cell enters in polarity reversal operation, and inverse voltage at the cell's terminals increases quickly. This is due to the fact that a forced current is now driven by the power supply operating as a generator.

After a short time, at about t₇₇₅₀=7750s, the temperature of the cell, which remained below 100°C during operation, quickly increases above 300°C, until irretrievable damage of the cell.

The test of an unprotected electric cell thus shows that without protection measures, a discharged electric cell, connected in series with another electric source, for example another at least partially charged electric cell, may enter in a reversal polarity state and be destroyed in short time.

Turning to Figure 6, the operation of a protected electric cell is described.

Between time t₀=0s and t₇₀₀₀=7000s, operation of the protected electric cell in Figure 6 is similar to the operation of the unprotected electric cell in Figure 5.

However, at the time the protected electric cell is fully discharged, no polarity reversal is observed. This is due to the diode 120 which avoids polarity reversal by redirecting current through itself.

As it can be seen on Figure 6, thanks to these measures no significant temperature rise of the protected cell is observed.

It should be noted that in case of an electric cell 110 which has a high withstand to polarity reversal, i.e. which has a forced current withstand close to the nominal current, the diode 120 may be optional, since the electric cell 110 will not be damaged by forced current during polarity reversal.

As emphasized above, when a diode 120 is needed, selecting diode 120 with a low reverse current is preferred, so as to reduce loss of stored energy during nominal operation of the protected electric cell 100.

Thus, thanks to simple and convenient constructive measures, an assembly comprising a protected electric cell 100 connected in series to an electric source, such as an electric cell assembly comprising at least two protected electric cells 100, may be protected efficiently from damage when an electric cell is discharged.

The disclosure also provides an electric device (not represented), comprising at least one electric cell assembly with at least two protected electric cells 100, for powering it. It should be understood that the configuration of the electric cell assembly is to be chosen so as to power adequately the electric device.

It should be noted more generally that the disclosure is not limited to the examples described and represented.

## Claims

1. Protected electric cell (100) comprising an electric cell (110) having two terminals, a positive electric line (111) and a negative electric line (112) respectively connected to the terminals of the electric cell (110), a diode (120) arranged in parallel to the electric cell (110) with its anode connected to the negative electric line (112) and its cathode connected to the positive electric line (111), and an electric fuse (130) arranged in series to the electric cell (110),
the electric cell (110) being configured to deliver a nominal current when discharging, the electric fuse (130) having a breaking capacity corresponding substantially to the nominal current,
so that, when totally or at least partially discharged, the electric cell (110) is protected from a polarity reversal caused by a forced current driven through it by another electric source connected in series to the protected electric cell (100).

2. Protected electric cell (100) as claimed in claim 1, wherein the electric source is another similar or identical protected electric cell.

3. Protected electric cell (100) as claimed in claim 1 or 2, wherein the maximum current limit in forward operation of the diode (120) is substantially twice the nominal current.

4. Protected electric cell (100) as claimed in any one of claims 1 through 3, wherein the protected electric cell (100) further comprises a printed circuit board (140) which supports the diode (120) and the electric fuse (130).

5. Protected electric cell (100) as claimed in claim 4, wherein the electric cell (110) has a substantially cylindrical shape and presents two opposite terminals on its bases, and the printed circuit board (140) has a substantially annular shape with an outer diameter corresponding substantially to an outer diameter of the substantially cylindrical shape of the electric cell (110), and is arranged at the level of one of the bases of the electric cell (110).

6. Protected electric cell (100) as claimed in claim 5, wherein the printed circuit board (140) is arranged at the level of the electric cell's base which presents the positive terminal of the electric cell (110).

7. Protected electric cell (100) as claimed in claim 5 or 6, wherein the electric cell's base which presents the positive terminal of the electric cell (110) comprises a protruding nipple (113), and the the printed circuit board (140) has an inner diameter corresponding substantially to the diameter of the protruding nipple (113).

8. Protected electric cell (100) as claimed in any one of claims 4 through 7, wherein the printed circuit board (140) comprises a metallic path at the level of the diode (120), and wherein the thickness of the metallic path at the level of the diode's (120) anode is at least 200 micrometers.

9. Protected electric cell (100) as claimed in any one of claims 4 through 8, wherein the protected electric cell (100) further comprises at least one protective sheath (170a, 170b) arranged at least around the electric cell (110) and the printed circuit board (140), the at least one protective sheath (170a, 170b) being preferably made of heat-shrinkable plastic.

10. Protected electric cell (100) as claimed in any one of claims 1 through 9, wherein the electric cell (110) is a lithium-based electric cell, and preferably a Lithium-Manganese Oxide (LiMnO2) electric cell.

11. Electric cell assembly (10, 200) comprising at least one branch (210) of protected electric cells (100), each branch (210) comprising at least two protected electric cells (100) as claimed in any one of claims 1 through 10 connected in series.

12. Electric cell assembly (200) as claimed in claim 11, comprising at least two branches (210) of protected electric cells (100), the branches (210) being connected in parallel.

13. Electric cell assembly (200) as claimed in claim 12, comprising two to four branches (210) of protected electric cells (100), each branch (210) comprising two protected electric cells (100) connected in series.

14. Electric cell assembly (200) as claimed in any one of claims 11 through 13, wherein each branch (210) is connected between a positive supply line (220) and a negative supply line (230) of the electric cell assembly, and wherein each branch (210) comprises a protection diode (213) with its anode connected to the positive supply line (220) and its cathode connected in series with the positive electric line (111) of the first protected electric cells (100) in line in said branch (210).

15. Electric device, comprising at least one electric cell assembly (10, 200) as claimed in any one of claims 11 through 14 for powering the electric device.
